# EUROPÄISCHE PATENTSCHRIFT

(11) **EP 1 006 644 B1**
(45) Veröffentlichungstag und Bekanntmachung des Hinweises auf die Patenterteilung: **22.08.2007**
(21) Anmeldenummer: 99811017.5
(22) Anmeldetag: 05.11.1999
(51) Int. Cl.: H02K 9/12, H02K 9/18

(54) **Gasgekühlte elektrische Maschine mit einem Axialventilator**
Gas cooled electrical machine with axial ventilator
Machine électrique refroidie par gaz avec ventilateur axial

(30) Priorität: 03.12.1998 DE 19856456
(43) Veröffentlichungstag der Anmeldung: 07.06.2000
(73) Patentinhaber: Alstom Technology Ltd, 5400 Baden (CH)
(72) Erfinder: Glahn, Joern Axel, Vernon, CT 06066 (US); Jung, Michael Dr., 79761 Waldshut (DE)

(56) Entgegenhaltungen:
- US-A- 1 672 680
- US-A- 4 039 872
- US-A- 4 208 599
- PATENT ABSTRACTS OF JAPAN vol. 7, no. 8 (E-152), 13. Januar 1983 (1983-01-13) -& JP 57 166850 A (TOSHIBA CORP), 14. Oktober 1982 (1982-10-14)

## Beschreibung

### TECHNISCHES GEBIET

Die vorliegende Erfindung betrifft eine gasgekühlte elektrische Maschine mit einem Axialventilator nach dem Oberbegriff des Anspruch 1.

### TECHNOLOGISCHER HINTERGRUND UND STAND DER TECHNIK

Mit steigender Maschinenauslastung werden bei rotierenden elektrischen Maschinen die Anforderungen an die Kühlung immer höher. Dies gilt insbesondere für die gasgekühlten Turbogeneratoren und in noch bedeutenderem Masse für Turbogeneratoren mit indirekt gekühlter Statorwicklung. Bei diesen Maschinentypen muss die gesamte in der Statorwicklung erzeugte Verlustwärme durch die Wicklungsisolierung in den gekühlten Statorblechkörper abgeleitet werden.

Es hat daher nicht an Vorschlägen gefehlt, die Kühlung zu verbessern, wobei sich eine grundsätzlich Umgestaltung des Kühlkreislaufes als sehr wirkungsvoll herausgestellt hat, nämlich der Übergang von der konventionellen Druckkühlung zur Saugkühlung. Die Saugkühlung bietet generell gegenüber der Druckkühlung den Vorzug, dass die Kaltluft, die aus den Kühlern strömt unmittelbar den Kühlkanälen im Generatorstator und Generatorrotor zugeführt wird. Somit lässt sich die durch den Maschinenventilator erzeugte Temperaturerhöhung vollständig eliminieren.

Mit dem Wunsch, Turbogeneratoren mit grösseren spezifischen Leistungen zu bauen, ist aber auch die Saugkühlung nicht zuletzt durch die Betriebsbedingungen begrenzt. Grenzleistungsmaschinen unterliegen generell ebenfalls dem permanenten Wunsch der Einheitsleistungserhöhung, womit die Anforderungen an das Kühlsystem ständig wachsen. Herz bzw. Antrieb des zumeist geschlossenen Saugkühlkreislaufes im Generator ist dabei ein auf einer Rotorwelle sitzender Ventilator, der die erforderliche Kühlstrommenge durch das verzweigte Kühlwegesystem fördert. Im Falle luftgekühlter Generatoren mit Saugkühlung wird meist ein relativ grosser Kühlvolumenstrom bei kleiner bis mittlerer Druckdifferenz benötigt, um den Kühlkreiswiderstand zu überwinden. Somit sind prinzipiell Ventilatoren axialer Bauart bevorzugt. Bekannt ist ein derartiger Generator mit Saugkühlung beispielsweise aus der europäischen Patentanmeldung 840 426.

Axialventilatoren arbeiten gemäss strömungstechnischen Grundregeln nur dann effizient, sofern die strömungstechnische Ausbildung der An- und Abströmpartie eine axiale Stromlinienführung im beschaufelten Bereich zulässt. Darüber hinaus ist die Ausführung eines stromabwärtigen Nachleitapparates zum Zwecke des kontrollierten Druckrückgewinnes aus der hohen kinetischen Energie am Laufradaustritt notwendig, um den Wirkungsgrad der Ventilatorstufe zu erhöhen bzw. die erforderliche Antriebsleistung des Ventilators bei gegebenem Volumenstrom und Druckaufbau zu vermindern, da diese Antriebsleistung die Verlustbilanz des Generators nennenswert beeinflusst.

Konventionelle, die Gestaltung des Zu- und Abströmbereichs betreffende Massnahmen zur Effizienzsteigerung von Axialventilatoren haben in der Regel einen enormen axialen Platzbedarf, wie in der EP 682 399 beispielhaft gezeigt wird. Es wird aber bei Generatoren grosser Einheitsleistung grundsätzlich angestrebt, den Anteil der elektrisch nutzbaren Aktivteillänge an der aus mechanischen bzw. wellendynamischen Gründen begrenzten Rotorlänge zwischen den Lagern zu maximieren. Eine bekannte Kombination eines Laufrads des Axialventilators und eines beschaufelten Leitrades hat neben dem unverhältnismässig grossen axialen Platzbedarf den Nachteil, eines erhöhten Geräuschpegels, was auf die Interaktion der Leitradbeschaufelung mit der stromauf von den rotierenden Laufradschaufeln generierten Nachlaufdellen zurückzuführen ist.

Die US-A-1672680 offenbart eine gasgekühlte elektrische Maschine, bei der eine Kühlgasströmung in axialer Strömungsrichtung von einem Axialventilator in "Entladungsringe" (discharge rings) gepresst wird, in denen der dynamische Druck in einen statischen Druck umgewandelt wird. Von dort gelangt das Kühlgas in eine Kammer, von der aus es über radiale Ventilationsräume und über einen Luftspalt zurück zum Einlass des Axialventilators gelangt. Die axiale Strömungsrichtung des Kühlgasstromes wird stromabwärts vom Axialventilator in eine radiale Strömungsrichtung in den **"Entladungsringen" umgelenkt. Bei dieser Maschine wird der Kühlgasstrom entweder durch** radiale Ventilationsräume in einen axialen Kanal oder durch Öffnungen, die radial zum Axialventilator angeordnet sind, angesaugt. Kühlgas, das durch die Öffnungen in ein Endteil fließt, wird von den Ventilatoren über eine Endverbindung der Wicklung des stationären Teils angesaugt, um es dadurch zu kühlen.

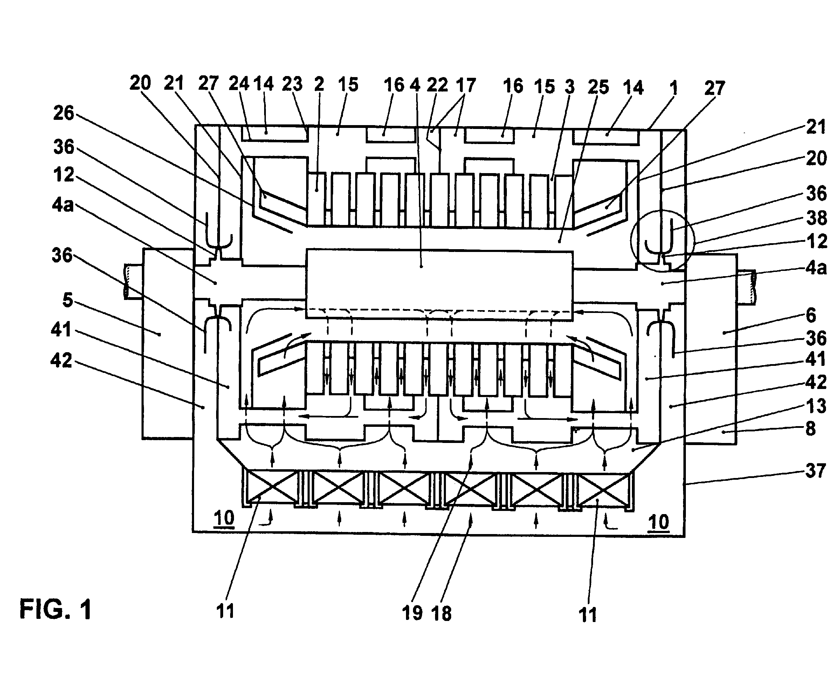

Aus der US-A-4208599 ist eine gasgekühlte elektrische Maschine bekannt, bei der eine **Kühlgasströmung stromaufwärts zum Axialventilator von einer im wesentlichen radialen in** eine im wesentlichen axiale Strömungsrichtung umlenkt wird. Danach wird das Kühlgas stromabwärts vom Axialventilator in Abströmräume geleitet, die verhältnismäßig groß ausgebildet sind, wie gut anhand von Fig. 1 zu erkennen ist.

### KURZE DARSTELLUNG DER ERFINDUNG

Ausgehend vom Stand der Technik liegt der Erfindung deshalb die Aufgabe zugrunde, in einfacher und wirtschaftlicher Weise eine effizient arbeitende Axialventilatorstufe mit Nachleitapparat auf geringstem axialem Bauraum in einem Turbogenerator mit Saugkühlkreislauf bereitzustellen.

Diese Aufgabe wird erfindungsgemäss durch die Merkmale des ersten Anspruchs gelöst und insbesondere darin, dass ein abströmseitig eines Axialventilators angeordneter Nachleitapparat als Umlenkdiffusor zur markanten Druckerhöhung und Umlenkung des Kühlgases ausgebildet ist. Bei einer gegebenen Anordnung und nachträglichem Einbau eines solchen Umlenkdiffusors resultiert infolge der Druckerhöhung eine deutliche Kühlvolumenstromerhöhung, wohingegen bei gegebenem Kühlluftstrom mit Hilfe des Umlenkdiffusors die Leistungsaufnahme des Ventilators reduziert und somit der Wirkungsgrad der gesamten elektrischen Maschine erhöht wird.

Eine besonders vorteilhafte Ausgestaltung der Erfindung zeichnet sich dadurch aus, dass der Umlenkdiffusor einen Diffusortrichter und eine Diffusorwand umfasst, wobei der Diffusortrichter an einer Trennwand angeordnet ist, die in der Ebene des Axialventilators den Einströmraum des Axialventilators von seinem Ausströmraum separiert. Die Diffusorwand ist abströmseitig am Diffusortrichter angeordnet.

Darüber hinaus ist es von besonderem Vorteil, wenn die Diffusorwand ringförmig ausgebildet ist und parallel zu einer Aussenverschalung eines Generators angeordnet ist.

Eine weitere bevorzugte Ausgestaltung zeichnet sich dadurch aus, dass die Diffusorwand kegelmantelförmig ausgebildet ist und somit an ihrem Aussenradius einen kleineren Abstand zur Aussenverschalung aufweist als an ihrem Innenradius.

Darüber hinaus ist von besonderem Vorteil, wenn zwischen der Diffusorwand und der Aussenverschalung eine Anzahl Leitschaufeln zur weiteren Druckerhöhung angeordnet ist.

Weitere vorteilhafte Ausgestaltungen der Erfindung sind den abhängigen Ansprüchen entnehmbar.

### KURZE BESCHREIBUNG DER ZEICHNUNG

Nachfolgend soll die Erfindung anhand der Zeichnung näher erläutert werden. Dabei sind nur die für das Verständnis der Erfindung wesentlichen Elemente schematisch dargestellt. Es zeigen die
- Fig. 1: einen Längsschnitt durch einen luftgekühlten Turbogenerator mit einem erfindungsgemässen Umlenkdiffusor im Kühlkreislauf;
- Fig. 2: eine vergrösserte Ansicht des Details 38 aus Fig. 1;
- Fig. 3: eine erste Ausführungsvariante des Details 38 aus Fig. 1;
- Fig. 4: eine weitere Ausführungsvariante des Details 38 aus Fig. 1.

### WEGE ZUR AUSFÜHRUNG DER ERFINDUNG

Der in Fig. 1 dargestellte luftgekühlte Turbogenerator weist ein Maschinengehäuse 1 auf, das einen aus Teilblechkörpern 2 bestehenden Statorblechkörper einschliesst. Im Statorblechkörper sind radiale Belüftungsschlitze 3 zwischen den einzelnen Teilblechkörpern 2 vorgesehen. Ein Rotor 4 ist in Bocklagern 5, 6 gelagert, die auf einem nicht dargestellten Fundament befestigt sind.

In einer Fundamentgrube 10 des Fundamentes ist eine Kühlanordnung der Maschine angeordnet. Sie ist modular aufgebaut und besteht aus im Beispielsfall sechs unter sich gleichartigen Kühlern 11. Dabei stehen die Eintrittsöffnungen der Kühler 11 mit Ausströmräumen 42 von beiderseits des Rotors 4 angeordneten Ventilatoren 12 in Verbindung und die Austrittsöffnungen der Kühler 11 münden in einen Ausgleichsraum 13. Das die Kühler 11 durchströmende Kühlgas ist mittels Pfeilen dargestellt, wobei einströmendes Heissgas mit 18 und ausströmendes Kaltgas mit 19 bezeichnet ist. Alle weiteren nicht näher bezeichneten Pfeile zeigen den Kühlkreislauf des Kühlgases auf. Der Kühlkreislauf ist lediglich in einer Maschinenhälfte durch Pfeile kenntlich gemacht, da hinsichtlich der Kühlung die Maschine symmetrisch aufgebaut ist.

Bei dem Kühlprinzip handelt es sich um eine sogenannte Revers- oder Saugkühlung, bei der Heissgas 18 mittels Ventilatoren 12 den Kühlern 11 zugeführt wird. Aus den Kühlern 11 strömt dann Kaltgas 19 durch den Ausgleichsraum 13 in den Maschinenrücken, also den Raum zwischen Maschinengehäuse 1 und dem aus Teilblechkörpern 2 aufgebauten Statorblechkörper. Im Gehäuserücken sind durch Gehäusespanten 22 und radiale und axiale Trennwände 23, 24 Heiss- und Kaltgaskammern 15, 17, 14 und 16 gebildet. Im Beispielsfall je eine Kaltgaskammer 14 an beiden Maschinenenden und eine Heissgaskammer 17 in Maschinenmitte, sowie beiderseits der vertikalen Maschinenmitte je eine Heissgaskammer 15 und eine Kaltgaskammer 16 zwischen den Kammern 14 und 17.

Der Kühlgasstrom verteilt sich im Ausgleichsraum 13 auf die Kaltgaskammern 14 und 16, wobei sich Teilströmungen ausbilden. Ein erster Teilstrom strömt zwischen Leitblechen 26 und einer Innenverschalung 21 direkt zum Rotor 4, ein zweiter strömt durch den Wickelkopf 27 in den Maschinenluftspalt 25, und ein dritter Kühlgasstrom gelangt durch die Kaltgaskammern 16 und Belüftungsschlitze 3 in den Luftspalt 25. Aus letzterem wird der Kühlgasstrom von den Ventilatoren 12 in einen Einströmraum 41 zwischen die Innenverschalung 21 und eine in der radialen Ebene eines jeden Ventilators angeordneten Trennwand 20 gesaugt und anschliessend zu den Kühlern 11 in der Fundamentgrube 10 gepresst.

Um nun in Grenzleistungsmaschinen dem grossen Bedarf an Kaltgas 19 mit genügend hohem Druck gerecht zu werden, sind die Ausströmräume 42 beiderseits des Rotors 4 erfindungsgemäss mit Umlenkdiffusoren 36 ausgestattet. Diese Umlenkdiffusoren 36 erlauben stromabwärts der Ventilatoren 12 eine markante kontrollierte Druckrückgewinnung aus der hohen kinetischen Energie des Heissgases 18. Dieser zurückgewonnenene Druck des Heissgases 18 ermöglicht eine effizientere Kühlung des Turbogenerators, da die oben beschriebenen, komplizierten Kühlgaswege nun durch den Stator und den Rotor mit mehr Kaltgas 19 pro Zeiteinheit beschickt werden können. So kann bei einer gegebenen Ventilatoranordnung und nachträglichem Einbau eines solchen Umlenkdiffusors infolge der Druckerhöhung eine deutliche Kühlvolumenstromerhöhung verzeichnet werden, wohingegen bei gegebenem Kühlluftstrom mit Hilfe des Umlenkdiffusors die Leistungsaufnahme des Ventilators reduziert und somit der Wirkungsgrad der gesamten elektrischen Maschine erhöht wird.

Darüber hinaus bleibt die axiale Länge des Rotors 4 zwischen den Lagerböcken im Vergleich zu einem konventionellen Generator erhalten, womit nun aber durch den erfindungsgemässen Umlenkdiffunsor eine verbesserte Kühlung vorliegt und die Einheitsleistung der Generator erhöhbar ist.

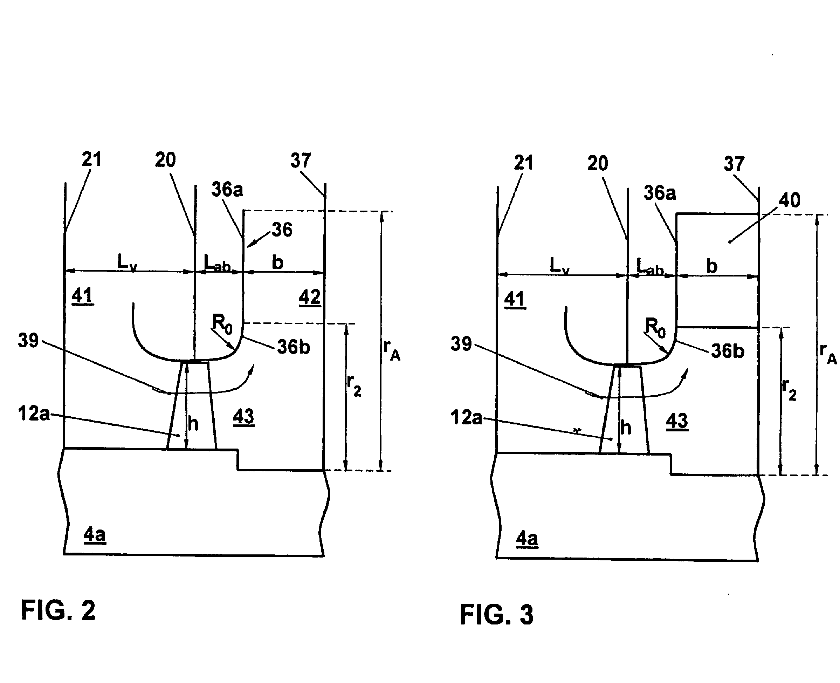

Fig. 2 zeigt anhand des Details 38 aus Fig. 1 den Umlenkdiffusor 36, bestehend aus einem an der Trennwand 20 befestigten Diffusortrichter 36b und einer daran angeordneten Diffusorwand 36a. Diese Diffusorwand 36a ist radial ausgerichtet und von einer Aussenverschalung 37 des Turbogenerators in einem Abstand b angeordnet. Die Aussenverschalung 37 ist ringförmig ausgebildet und weist einen Innenradius r2 und einen Aussenradius rA auf, und sie ist zudem von der Trennwand 20 mit dem Abstand Lab distanziert.

Der Diffusortrichter 36b weist einen Trichterradius R0 auf und begrenzt zwischen sich und einer Rotorwelle 4a des Rotors 4 (Fig. 1) einen Strömungskanal 43 für ein Kühlgas, welches Kühlgas durch den Strömungspfeil 39 symbolisiert wird. Die Höhe des Strömungskanals 43 ist mit h bezeichnet, was gleichermassen in etwa der Höhe der Laufschaufel 12a des Ventilators 12 (Fig. 1) entspricht. Zwischen der Trennwand 20 und einer stromaufwärts der Ventilatorschaufel 12a angeordneten Innenverschalung 21 ist der Einströmraum 41 mit einer Breite LV begrenzt.

Eine optimale Druckrückgewinnung aus der kinetischen Energie, die das Kühlgas beim Passieren des Ventilators 12 aufnimmt, ergibt sich für die folgenden Randbedingungen:
(1.) Der Trichterradius R0 ist grösser als das 0,6-fache der Kanalhöhe h des Strömungskanals 43;
(2.) der Aussenradius rA der Diffusorwand 36a ist kleiner als ihr 2-facher Innenradius r2;
(3.) der Abstand b der Diffusorwand 36a an ihrem Aussenradius rA zur Aussenverschalung 37 etwa das 0,78- bis 0,9-fache der Kanalhöhe h des Strömungskanals 43 beträgt; und
(4.) zwischen der Innenverschalung 21 und der Trennwand 20 weist der Einströmkanal 41 eine Breite LV aufweist, die grösser ist als das 1,8-fache der Kanalhöhe h des Strömungskanals 43.

Eine typische Druckrückgewinnung durch den erfindungsgemässen Umlenkdiffusor zeigt das folgende Zahlenbeispiel:
Bei einem luftgekühlten 300MVA-Turbogenerator, 50 Hz, ergibt sich ein Druckrückgewinn aus der kinetischen Energie hinter dem Ventilator in statischen Druck von etwa 45%. Dabei weist der Kühlluftvolumenstrom etwa **einen Wert von 30 m³/s auf, die Kanalhöhe beträgt etwa h=140 mm, der** Aussenradius der Diffusorwand beträgt etwa rA=1000mm und der Abstand der Diffusorwand von der Aussenverschalung etwa b=110mm. Des weiteren bertragen der Abstand zwischen der Trennwand 20 und der Innenverschalung 21 etwa LV=270mm, der Innenradius der Diffusorwand 36 etwa r2=700mm und der Trichterradius etwa R0=85mm.

Von besonderem Vorteil ist, dass die Druckrückgewinnung auf kleinstem axialem Raum im Generatorgehäuse 1 durchgeführt wird. Auf diese weise lässt sich die Einheitsleistung derartiger Turbogeneratoren mit Umlenkdiffusoren markant erhöhen, ohne dass die Gesamtlänge der Maschine zwischen den Lagerböcken 5, 6 zunimmt.

Eine erste Ausführungsvariante des erfindungsgemässen Umlenkdiffusors 36 zeigt Fig.3. Zwischen der Diffusorwand 36a und der Aussenverschalung 37 ist eine Anzahl Leitschaufel 40 angeordnet, von denen lediglich eine einzige dargestellt ist. Diese Anzahl Leitschaufeln 40 dienen der weiteren Druckrückgewinnung aus der kinetischen Energie des Kühlgases. Dabei liegt die Ausgestaltung und Anordnung derartiger Leitschaufeln 40 im Bereich des fachmännischen Könnens, so dass sich eine detaillierte geometrische Bemassung derselben erübrigt. Von besonderem Vorteil ist dabei, dass mit einer Beschaufelung die radialen Abmessungen der Diffusorwand 36 reduziert werden kann bei gleichem Druckrückgewinn.

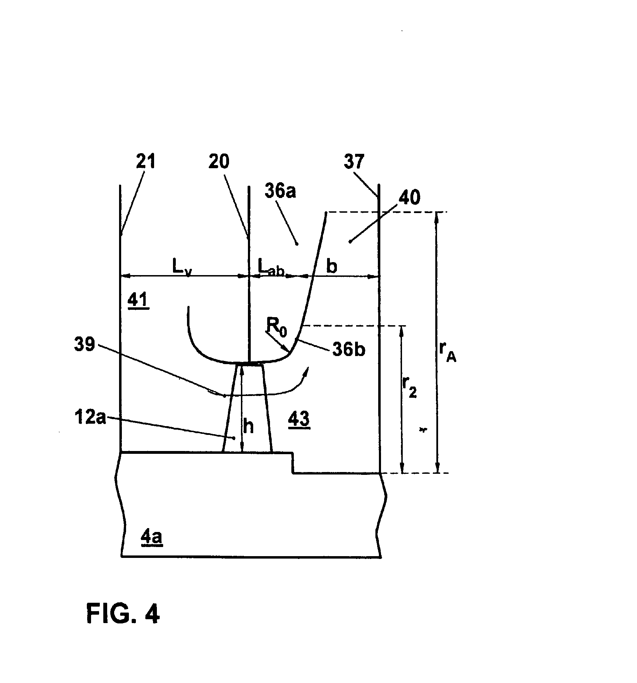

Eine weitere Ausführungsvariante des erfindungsgemässen Umlenkdiffusors 36 ist in Fig. 4 offenbart. Die Diffusorwand 36a ist hier kegelmantelförmig ausgebildet und weist an ihrem Aussenradius r_{A} einen kleineren Abstand b zur Aussenverschalung 37 auf als an ihrem Innenradius r2. Durch diese kontrollierte Verzögerung mittels der kegelmantelförmigen Diffusorwand und der damit verbundenen Vermeidung einer Strömungsablösung lässt sich die bereits beschriebene Druckrückgewinnung gezielt einstellen.

Die Erfindung ist keinesfalls auf die hier dargestellten Ausführungsformen beschränkt. Ohne den Erfindungsgedanken zu verlassen, ist beispielsweise auch denkbar, das zur Druckrückgewinnung eine Kombination aus der kegelmantelförmigen Diffusorwand 36a (Fig. 4) und einer Beschaufelung zwischen der Diffusorwand 36a und der Aussenverschalung 37 Verwendung finden. Des weiteren ist es denkbar, den erfindungsgemässen Umlenkdiffusor 36 auch bei einem konventionellen Kühlkreislauf mit sogenannter Druckkühlung (statt Saugkühlung) zu verwenden oder auch ein spezielles Kühlgas, wie beispielsweise Helium, zu verwenden.

### BEZEICHNUNGSLISTE

- 1: Maschinengehäuse
- 2: Teilblechkörper
- 3: Belüftungsschlitze
- 4: Rotor
- 4a: Rotorwelle
- 5, 6: Bocklager
- 7: Fundament
- 10: Fundamentgrube
- 11: Kühler
- 12: Ventilator
- 12a: Laufschaufel
- 13: Ausgleichsraum
- 14, 16: Kaltgaskammer
- 15, 17: Heissgaskammer
- 18: Heissluft vor 11
- 19: Kaltluft nach 11
- 20: Trennwand
- 21: Innenverschalung
- 22: Gehäusespanten
- 23: radiale Trennwand
- 24: axiale Trennwand
- 25: Luftspalt
- 26: Leitbleche
- 27: Wickelkopf
- 28: Seitenwand
- 36: Umlenkdiffusor
- 36a: Diffusorwand
- 36b: Diffusortrichter
- 37: Aussenverschalung
- 38: Detailansicht
- 39: Strömungspfeil
- 40: Leitschaufel
- 41: Anströmraum
- 42: Ausströmraum
- 43: Strömungskanal
- LV: Abstand zwischen 20 und 21
- Lab: Abstand zwischen 36a und 20
- R0: Trichterradius
- h: Höhe von 43
- rA: Aussenradius von 36a
- r2: Innenradius von 36a
- b: Abstand zwischen 20 und 37

## Patentansprüche

1. Gasgekühlte elektrische Maschine mit einem Axialventilator (12) und einem abströmseitig des Axialventilators (12) angeordneten Nachleitapparat zur Druckerhöhung eines Kühlgases, wobei das Kühlgas mittels Axialventilator (12) aus einem stromaufwärts zum Axialventilator (12) angeordneten Anströmraum (41), welcher durch eine Innenverschalung (21) und eine in der radialen Ebene des Axialventilators (12) angeordneten Trennwand (20) begrenzt ist, in einen stromabwärts zum Axialventilator (12) angeordneten Ausströmraum (42), welcher durch die Trennwand (20) und eine Aussenverschalung (37) begrenzt ist, forciert treibbar ist,
**dadurch gekennzeichnet,**
**dass** der Anströmraum (41) als Diffusor zur Umlenkung einer Kühlgasströmung (39) von einer im wesentlichen radialen in eine im wesentlichen axiale Strömungsrichtung und der Nachleitapparat als Umlenkdiffusor (36) zur Umlenkung der Kühlgasströmung (39) von einer im wesentlichen axialen in eine im wesentlichen radiale Strömungsrichtung ausgebildet ist.

2. Gasgekühlte elektrische Maschine nach Anspruch 1, **dadurch gekennzeichnet,**
**dass** der Umlenkdiffusor (36) einen Diffusortrichter (36b) und eine Diffusorwand (36a) umfasst, welcher Diffusortrichter (36b) mit seiner kleinen Trichteröffnung an der Trennwand (20) angeordnet ist, und welche Diffusorwand (36a) an einer grossen Trichteröffnung des Diffusortrichters (36b) angeordnet ist, wobei die Diffusorwand (36a) an der grossen Trichteröffnung einen Innenradius (r2) aufweist und wobei sich die Diffusorwand (36a) sich zwischen diesem Innenradius (r2) und einem Aussenradius (rA) erstreckt.

3. Gasgekühlte elektrische Maschine nach Anspruch 2, **dadurch gekennzeichnet, dass** die Diffusorwand (36a) ringförmig ausgebildet ist und parallel zur Aussenverschalung (37) in einem axialen Abstand (b) angeordnet ist.

4. Gasgekühlte elektrische Maschine nach Anspruch 2, **dadurch gekennzeichnet, dass** die Diffusorwand (37) kegelmantelförmig ausgebildet ist, so dass die Diffusorwand (36a) an ihrem Aussenradius (rA) einen kleineren Abstand (b) zur Aussenverschalung (37) ausweist als an ihrem Innenradius (r2).

5. Gasgekühlte elektrische Maschine nach einem der Ansprüche 2 bis 4, **dadurch gekennzeichnet, dass** der Diffusortrichter (36b) einen Trichterradius (R0) aufweist, welcher Trichterradius (R0) grösser ist als das 0,6-fache einer Kanalhöhe (h) eines Strömungskanals (43), welcher Strömungskanal (43) sich zwischen der Trennwand (20) und einer Rotorwelle (4a) der elektrischen Maschine ausbildet.

6. Gasgekühlte elektrische Maschine nach Anspruch 5, **dadurch gekennzeichnet, dass** der Abstand (b) der Diffusorwand (36a) an ihrem Aussenradius (rA) zur Aussenverschalung (37) etwa das 0,78- bis 0,9-fache der Kanalhöhe (h) des Strömungskanals (43) beträgt.

7. Gasgekühlte elektrische Maschine nach einem der Ansprüche 5 oder 6, **dadurch gekennzeichnet, dass** der Einströmraum (41) zwischen der Innenverschalung (21) und der Trennwand (20) eine Breite (LV) aufweist, wobei die Breite (LV) grösser ist als das 1,8-fache der Kanalhöhe (h) des Strömungskanals (43).

8. Gasgekühlte elektrische Maschine nach einem der Ansprüche 2 bis 7, **dadurch gekennzeichnet, dass** der Aussenradius (rA) der Diffusorwand (36a) kleiner ist als ihr 2-facher Innenradius (r2).

9. Gasgekühlte elektrische Maschine nach einem der Ansprüche 2 bis 8, **dadurch gekennzeichnet, dass** zwischen der Diffusorwand (36a) und der Aussenverschalung (37) eine Anzahl Leitschaufeln (40) angeordnet sind.

10. Gasgekühlte elektrische Maschine nach einem der vorgehenden Ansprüche, **dadurch gekennzeichnet, dass** mit dem Ventilator (12) erwärmtes Kühlgas (Heissgas) aus der elektrischen Maschine heraussaugbar ist.

## Claims

1. Gas-cooled electrical machine having an axial fan (12) and a downstream guidance mechanism, arranged downstream of the axial fan (12), in order to raise the pressure of a cooling gas, in which case the cooling gas can be driven in a forced manner by means of an axial fan (12) from an inlet area (41), which is arranged upstream of the axial fan (12) and is bounded by an inner casing (21) and a partition wall (20) arranged in the radial plane of the axial fan (12), into an outlet area (42) which is arranged downstream of the axial fan (12) and is bounded by the partition wall (20) and an outer casing (37),
**characterized**
**in that** the inlet area (41) is designed as a diffusor in order to deflect a cooling-gas flow (39) from an essentially radial flow direction to an essentially axial flow direction, and the downstream guidance mechanism is designed as a deflection diffusor (36) in order to deflect the cooling-gas flow (39) from an essentially axial flow direction to an essentially radial flow direction.

2. Gas-cooled electrical machine according to Claim 1, **characterized in that**
**in that** the deflection diffusor (36) comprises a diffusor funnel (36b) and a diffusor wall (36a), which diffusor funnel (36b) is arranged with its small funnel opening against the partition wall (20), and which diffusor wall (36a) is arranged on a large funnel opening of the diffusor funnel (36b), in which case the diffusor wall (36a) has an inner radius (r2) on the large funnel opening, and in which case the diffusor wall (36a) extends between this inner radius (r2) and an outer radius (rA).

3. Gas-cooled electrical machine according to Claim 2, **characterized in that** the diffusor wall (36a) is designed in an annular shape and is arranged parallel to the outer casing (37), at an axial distance (b).

4. Gas-cooled electrical machine according to Claim 2, **characterized in that** the diffusor wall (37) is designed in the shape of a conical envelope, such that the outer radius (rA) of the diffusor wall (36a) is at a shorter distance (b) from the outer casing (37) than its inner radius (r2).

5. Gas-cooled electrical machine according to one of Claims 2 to 4, **characterized in that** the diffusor funnel (36b) comprises a funnel radius (R0), which funnel radius (R0) is greater than 0.6 times a channel height (h) of a flow channel (43), which flow channel (43) is formed between the partition wall (20) and a rotor shaft (4a) of the electrical machine.

6. Gas-cooled electrical machine according to Claim 5, **characterized in that** the distance (b) between the outer radius (rA) of the diffusor wall (36a) and the outer casing (37) is about 0.78 to 0.9 times the channel height (h) of the flow channel (43).

7. Gas-cooled electrical machine according to one of Claims 5 or 6, **characterized in that** the inlet area (41) between the inner casing (21) and the partition wall (20) has a width (LV), in which case the width (LV) is greater than 1.8 times the channel height (h) of the flow channel (43).

8. Gas-cooled electrical machine according to one of Claims 2 to 7, **characterized in that** the outer radius (rA) of the diffusor wall (36a) is less than twice its inner radius (r2).

9. Gas-cooled electrical machine according to one of Claims 2 to 8, **characterized in that** a number of guide vanes (40) are arranged between the diffusor wall (36a) and the outer casing (37).

10. Gas-cooled electrical machine according to one of the preceding claims, **characterized in that** cooling gas (hot gas) which has been heated by the fan (12) can be sucked out of the electrical machine.

## Revendications

1. Machine électrique refroidie par gaz, qui présente un ventilateur axial (12) et un appareil de guidage final disposé du côté aval du ventilateur axial (12) pour augmenter la pression d'un gaz de refroidissement, le gaz de refroidissement pouvant être entraîné de manière forcée au moyen du ventilateur axial (12) depuis un espace d'entrée (41) disposé en amont du ventilateur axial (12) et délimité par un caisson intérieur (21) et une cloison de séparation (20) disposée dans le plan radial du ventilateur axial (12) jusque dans un espace de sortie (42) disposé en aval du ventilateur axial (12) et délimité par la cloison de séparation (20) et un caisson extérieur (37),
**caractérisé en ce que**
l'espace d'entrée (41) est configuré comme diffuseur qui dévie un écoulement (39) de gaz de refroidissement depuis une direction d'écoulement essentiellement radiale jusque dans une direction d'écoulement essentiellement axiale et **en ce que** l'appareil de guidage final est configuré comme diffuseur de déviation (36) qui dévie l'écoulement (39) de gaz de refroidissement depuis une direction essentiellement axiale jusque dans une direction d'écoulement essentiellement radiale.

2. Machine électrique refroidie par gaz selon la revendication 1, **caractérisée en ce que** le diffuseur de déviation (36) comprend un entonnoir de diffusion (36b) et une paroi de diffusion (36a), lequel entonnoir de diffusion (36b) est disposé avec sa petite ouverture d'entonnoir sur la cloison de séparation (20) et la paroi de diffusion (36a) est disposée sur une plus grande ouverture de l'entonnoir de diffusion (36b), la paroi de diffusion (36a) présentant sur la grande ouverture de l'entonnoir un rayon intérieur (r₂) et la paroi de diffusion (36a) s'étend entre le rayon intérieur (r₂) et un rayon extérieur (r_{A}).

3. Machine électrique refroidie par gaz selon la revendication 2, **caractérisée en ce que** la paroi de diffusion (36a) a une configuration annulaire et est disposée parallèlement au caisson extérieur (37) à une distance axiale (b) de ce dernier.

4. Machine électrique refroidie par gaz selon la revendication 2, **caractérisée en ce que** la paroi de diffusion (37) a une configuration en forme d'enveloppe conique de telle sorte que la paroi de diffusion (36a) présente sur son rayon extérieur (r_{A}) une plus petite distance (b) par rapport au caisson extérieur (37) que sur son rayon intérieur (r₂).

5. Machine électrique refroidie par gaz selon l'une des revendications 2 à 4, **caractérisée en ce que** l'entonnoir de diffusion (36b) a un rayon d'entonnoir (R₀), lequel rayon d'entonnoir (R₀) est supérieur à 0,6 fois la hauteur (h) d'un canal d'écoulement (43), lequel canal d'écoulement (43) est formé entre la cloison de séparation (20) et l'arbre (4a) du rotor de la machine électrique.

6. Machine électrique refroidie par gaz selon la revendication 5, **caractérisée en ce que** la distance (b) de la paroi de diffusion (36a) par rapport au caisson extérieur (37) correspond sur son rayon extérieur (r_{A}) sensiblement à 0,78-0,9 fois la hauteur (h) du canal d'écoulement (43).

7. Machine électrique refroidie par gaz selon l'une des revendications 5 ou 6, **caractérisée en ce que** l'espace d'entrée (41) présente entre le caisson intérieur (21) et la cloison de séparation (20) une largeur (LV), et la largeur (LV) est supérieure à 1,8 fois la hauteur (h) du canal d'écoulement (43).

8. Machine électrique refroidie par gaz selon l'une des revendications 2 à 7, **caractérisée en ce que** le rayon extérieur (r_{A}) de la paroi de diffusion (36a) est inférieure au double de son rayon intérieur (r₂).

9. Machine électrique refroidie par gaz selon l'une des revendications 2 à 8, **caractérisée en ce que** plusieurs aubes de guidage (40) sont disposées entre la paroi de diffusion (36a) et le caisson extérieur (37).

10. Machine électrique refroidie par gaz selon l'une des revendications précédentes, **caractérisée en ce que** le ventilateur (12) permet d'aspirer du gaz de refroidissement réchauffé (gaz chaud) hors de la machine électrique.
